(19) 

Europäisches
Patentamt
European
Patent Office
Office européen
des brevets

(11) **EP 4 567 006 A1**

(12) **EUROPEAN PATENT APPLICATION**

(43) Date of publication:
**11.06.2025 Bulletin 2025/24**

(21) Application number: **24217031.4**

(22) Date of filing: **03.12.2024**

(51) International Patent Classification (IPC):
**C02F 5/02** *(2023.01)* **B01D 53/78** *(2006.01)*
**C02F 1/66** *(2023.01)*

(52) Cooperative Patent Classification (CPC):
**C02F 5/02; B01D 53/78;** B01F 23/23; C02F 1/66

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.12.2023 TW 112147004**

(71) Applicant: **Mega Union Technology Inc.
330 Taoyuan City (TW)**

(72) Inventors:
• **LIN, Kuo-Ching
330 Taoyuan City (TW)**
• **SHIU, Shr-Han
330 Taoyuan City (TW)**
• **HUANG, Yi-Syuan
330 Taoyuan City (TW)**
• **YANG, Cheng-Meng
330 Taoyuan City (TW)**

(74) Representative: **Schwerbrock, Florian
Hagenauer Strasse 1
10435 Berlin (DE)**

(54) **SYSTEM AND METHOD FOR REDUCING WASTEWATER HARDNESS AND CARBON CAPTURE UNDER HYPERGRAVITY**

(57) A system and method for reducing water-hardness and carbon capture in wastewater under hypergravity are provided and include a wastewater mixing tank and a supergravity reactor. The wastewater mixing tank is connected to a wastewater source. Wastewater of the wastewater source contains metal ions and has a first hardness level. The wastewater mixing tank is configured to mix the wastewater and an alkaline liquid to adjust the pH value of the wastewater to be alkaline and form a first mixed wastewater. The hypergravity reactor is connected to the wastewater mixing tank and introduce a gas having a first carbon dioxide concentration. The hypergravity reactor mixes the gas and the mixed wastewater at a flow ratio of 30-400: 1. The mixed wastewater and the gas react to generate recycled metal salts, an alkaline recycled liquid, and a treated gas.

Gas
121

122

Treated gas
125

Blower
123

Gas flow
meter 124

Alkaline liquid
tank
111

pH measuring
device
113

112

114

Wastewater
Source
10

Wastewater Mixing
Tank
11

Liquid
flowmeter
115

Hypergravity
Reactor
12

Recycling
temporary storage
tank 13

131

Alkaline recovery
liquid
14

FIG. 4

EP 4 567 006 A1

**Description**

**BACKGROUND** OF THE INVENTION

**1. FIELD OF THE INVENTION**

The present disclosure relates to a system and method for reducing the wastewater hardness and carbon capture, and in particular to a system and method for reducing the hardness of wastewater under hypergravity, removing carbon dioxide from waste gas, and generating metal salts precipitates with economic value.

**2. DESCRIPTION OF THE PRIOR ART**

A large amount of wastewater is often produced in the industrial production process. Because wastewater contains high concentrations of metal compounds, the water hardness is too high, and it is easy to scale and block pipelines and damage equipment, making subsequent treatment difficult.

The existing methods for reducing the hardness of wastewater are distillation, lime soda, and cation exchange. The distillation method uses water with different boiling points from $Ca^{2+}$ and $Mg^{2+}$ ions to raise the temperature, convert the water into water vapor and leave solids (scale), and then condense the water vapor back into water to complete the recovery. The lime soda method adds calcium oxide CaO (quicklime) and sodium carbonate $Na_2CO_3$ (soda) to water, allowing sodium ions to replace $Ca^{2+}$ and $Mg^{2+}$ ions to obtain calcium carbonate or magnesium carbonate precipitates to which reduces the hardness of the water, but the disadvantage of this method is that sodium ions are still left in the water.The cation exchange method uses ion exchange resin, adding sodium chloride or sodium carbonate and other sodium-containing compounds to the resin to exchange the hard mineral ions in the water into sodium ions and flow out, and the hard mineral ions will be adsorbed by the resin or scale builds up on the resin. When hard water passes around the beads, hard mineral ions are absorbed preferentially, replacing sodium ions.

Although the above methods can effectively reduce the hardness in water and obtain by-products in different ways, the by-products of the distillation method have no recovery value. Furthermore, besides adjusting the pH, the above methods require the addition of additional chemicals in order to achieve the purpose of removing hardness, which increases the cost of the removal process. In addition, although the lime soda method and cation exchange method will produce calcium and magnesium carbonate having recovery values, the methods need to be further purified to achieve a recyclable purity. And the cation exchange method further requires regular cleaning of the resin to ensure the exchange capacity of the resin.

**SUMMARY OF THE INVENTION**

The present disclosure provides a method for reducing the hardness of wastewater, removing carbon dioxide from waste gas, to overcome the deficiencies and drawbacks of existing technologies.

The present disclosure provides a system for reducing wastewater hardness and carbon capture under hypergravity including the following:

a wastewater mixing tank connected to a wastewater source, in which a wastewater of the wastewater source contains metal ions and has a first hardness level, the wastewater mixing tank is configured to mix the wastewater and an alkaline liquid to adjust a pH value of the wastewater to alkaline and to form a mixed wastewater; and

a hypergravity reactor connected to the wastewater mixing tank and introducing a gas having a first carbon dioxide concentration, wherein the hypergravity reactor mixes the gas and the mixed wastewater at a flow ratio of 30-400:1 for reaction to generate metal salt precipitates, an alkaline recovery liquid, and a treated gas;

the alkaline recovery liquid has a second hardness level that is lower than the first hardness level, and the treated gas has a second carbon dioxide concentration that is lower than the first carbon dioxide concentration.

Preferably, the system further includes a recycling temporary storage tank, in which the recycling temporary storage tank is connected to the hypergravity reactor and the wastewater mixing tank, the recycling temporary storage tank is configured to inject the alkaline recovery liquid into the wastewater mixing tank and circulate the alkaline recovery liquid for a specific number of cycles.

Preferably, the system further includes a blower, wherein the blower is connected to the hypergravity reactor to introduce the gas having the first carbon dioxide concentration into the hypergravity reactor.

Preferably, the wastewater contains calcium chloride.

Preferably, the gas is exhaust gas or air, and the first carbon dioxide concentration of the gas is 0.2-12%.

Preferably, the alkaline liquid is alkaline wastewater, sodium hydroxide, or potassium hydroxide.

Preferably, a hypergravity factor of the hypergravity reactor is 50-250.

Preferably, a carbon dioxide removal rate of the system is 5.5-64% and/or a hardness removal rate of the system is 8-99%.

Furthermore, the present disclosure provides a system for reducing wastewater hardness and carbon capture under hypergravity including the following:

a wastewater mixing tank connected to a wastewater source, in which a wastewater of the wastewater source contains metal ions and has a first hardness level of 700-4100 ppm, the wastewater mixing tank is configured to mix the wastewater and an alkaline liquid to adjust a pH value of the wastewater to 11.5-12.5 and to form a mixed wastewater; and

a hypergravity reactor connected to the wastewater mixing tank and introducing a gas having a first carbon dioxide concentration of 0.2-12%, wherein the hypergravity reactor mixes the gas and the mixed wastewater at a flow ratio of 30-400:1 for reaction to generate metal salt precipitates, a hypergravity factor of the hypergravity reactor is 50-250, an alkaline recovery liquid, and a treated gas; and

a recycling temporary storage tank connected to the hypergravity reactor and/or the wastewater mixing tank, in which the recycling temporary storage tank is configured to receive the alkaline recovery liquid and to inject the alkaline recovery liquid into the wastewater mixing tank and circulate the alkaline recovery liquid for 2-17 cycles;

the alkaline recovery liquid has a second hardness level that is lower than the first hardness level, the treated gas has a second carbon dioxide concentration that is lower than the first carbon dioxide concentration, and a carbon dioxide removal rate of the system is 5.5-64% and/or a hardness removal rate of the system is 8-99%.

Furthermore, the present disclosure provides a method for reducing wastewater hardness and carbon capture under hypergravity, including the following steps:

injecting a wastewater from a wastewater source into a wastewater mixing tank, the wastewater containing metal ions and having a first hardness level, mixing the wastewater and an alkaline liquid in the wastewater mixing tank to adjust a pH value of the wastewater to alkaline, thereby forming a mixed wastewater; and

injecting the mixed wastewater into a hypergravity reactor, and introducing a gas having a first carbon dioxide concentration, wherein the hypergravity reactor mixes the mixed wastewater and the gas at a flow ratio of 30-400:1 for reaction to generate metal salt precipitates, an alkaline recovery liquid, and a treated gas;

the alkaline recovery liquid has a second hardness level that is lower than the first hardness level, and the treated gas has a second carbon dioxide concentration that is lower than the first carbon dioxide concentration.

Preferably, the method further includes injecting the alkaline recovery liquid into a recycling temporary storage tank, and injecting the alkaline recovery liquid into the wastewater mixing tank and circulating the alkaline recovery liquid for a specific number of cycles.

The system and method for removing wastewater hardness of the present disclosure can reduce the hardness level in wastewater, remove carbon dioxide in waste gas, and generate metal salt precipitates with economic value, by(1) adjusting the pH in wastewater, (2) The hardness and carbon dioxide in the wastewater are simultaneously passed into the reactor to increase the mass transfer efficiency, (3) the precipitated solids are collected and analyzed to determine their composition, and (4) adjust the two system modes to meet the requirements. Therefore, the system and method of the present disclosure only need to adjust the pH throughout the process. The reactants come from gas phase and water phase waste, and the waste is recycled into industrial raw materials for reuse, such as calcium carbonate, with a purity of more than 95%.

**BRIEF DESCRIPTION OF THE DRAWINGS**

Implementations of the present disclosure will now be described, by way of embodiment, with reference to the attached figures.

FIG. 1 is a flow chart of a first embodiment of a method for reducing wastewater hardness and carbon capture under hypergravity of the present disclosure.

FIG. 2 is a flow chart of a second embodiment of a method for reducing wastewater hardness and carbon capture under hypergravity of the present disclosure.

FIG. 3 is a comparison chart of a method for reducing wastewater hardness and carbon capture under hypergravity of the present disclosure at different hypergravity factors.

FIG. 4 is a schematic chart of a first embodiment of a system for reducing wastewater hardness and carbon capture under hypergravity of the present disclosure.

FIG. 5 is a schematic chart of a second embodiment of a system for reducing wastewater hardness and carbon capture under hypergravity of the present disclosure.

FIG. 6 is a comparison chart of the method and system of for reducing wastewater hardness and carbon capture under hypergravity the present disclosure using different alkaline liquids.

## DESCRIPTION OF THE PREFERRED EMBODIMENTS

Reference will now be made in detail to representative embodiments illustrated in the accompanying drawings. It should be understood that the following descriptions are not intended to limit the embodiments to one preferred embodiment. To the contrary, it is intended to cover alternatives, modifications, and equivalents, as can be included within the spirit and scope of the described embodiments, as defined by the appended claims. Thereinafter, the implementation disclosure and the related embodiment will be described to illustrate the characteristics of the present disclosure. However, the embodiment well known by the persons skilled in that art may not be specifically described in the specification.

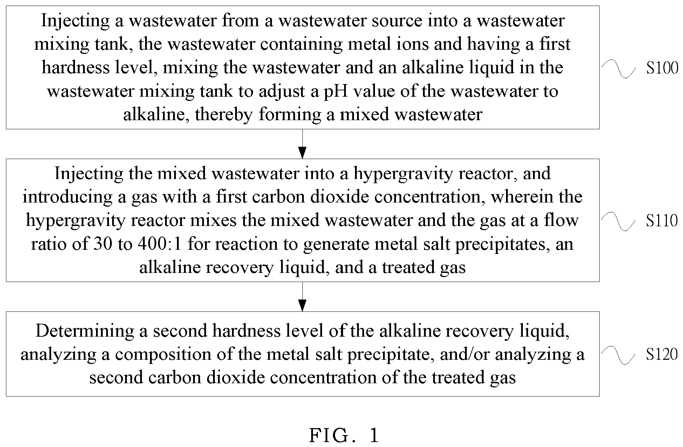

Please refer to FIGS. 1 to 4, which are flow charts of the first and second embodiments of a method for reducing wastewater hardness and carbon capture under hypergravity according to the present disclosure.

The method for reducing wastewater hardness and carbon capture under hypergravity of the present disclosure includes two different embodiments. The first embodiment is a continuous flow, as shown in FIG. 1. It is suitable for when the hardness in the wastewater is low, and the concentration of the waste gas used for the reaction is high enough. The removal of hardness in the water can be completed through the continuous flow operation, and then the hardness in the water can be removed. Separation of solids from liquids. The solids are recycled, and the liquids are passed into the subsequent membrane bioreaction (MBR) process.

The system for reducing wastewater hardness and carbon capture under hypergravity of the present disclosure are provided with a wastewater source 10, a wastewater mixing tank 11, an alkaline liquid tank 111, a first pump 112, a pH measuring device 113, a second pump 114, a liquid flowmeter 115, hypergravity reactor 12, a gate valve 122, a blower 123, a gas flowmeter 124, a recycling temporary storage tank 13, a third pump 131, and a fourth pump 132.

The first embodiment of the method for reducing wastewater hardness and carbon capture under hypergravity of the present disclosure includes the following steps:

Step S100: Injecting a wastewater from a wastewater source 10 into a wastewater mixing tank 11, the wastewater containing metal ions and having a first hardness level, mixing the wastewater and an alkaline liquid in the wastewater mixing tank 11 to adjust the pH value of the wastewater to alkaline, thereby forming a mixed wastewater.

Step S110: Injecting the mixed wastewater into a hypergravity reactor 12, and indroducing a gas having a first carbon dioxide concentration. The hypergravity reactor 12 mixes the mixed wastewater and the gas at a flow ratio of 30 to 400:1 for reaction to generate metal salt precipitates 15, an alkaline recovery liquid 14, and a treated gas 125.

Step S120: Determining the hardness level of the alkaline recovery liquid 14, analyzing the composition of the metal salt precipitates 15, and/or analyzing the second carbon dioxide concentration of the treated gas 125.

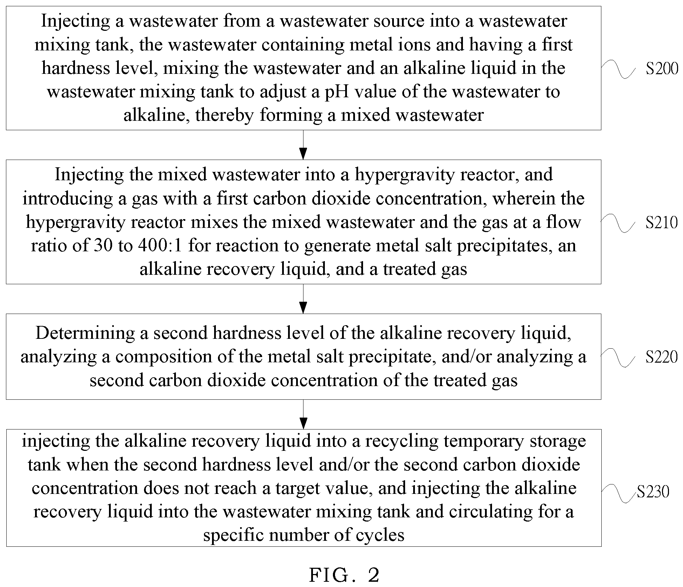

The second embodiment is a circulatory flow. As shown in FIG. 2, it is suitable for when the hardness of the wastewater is low, and the concentration of the waste gas used for reaction is relatively low. Through the operation of circulating flow, the required number of cycles can be estimated based on the test results after the first cycle, and the pH value needs to be maintained during the cycles. After reaching the target hardness, the solid and liquid are separated, the solid is recycled, and the liquid is passed into the subsequent membrane biological reaction (MBR) process.

The second embodiment of the present disclosure includes the following steps:

Step S200: Injecting a wastewater from a wastewater source 10 into a wastewater mixing tank 11, the wastewater containing metal ions and having a first hardness level, mixing the wastewater and an alkaline liquid in the wastewater mixing tank 11 to adjust the pH value of the wastewater to alkaline, thereby forming a mixed wastewater.

Step S210: Injecting the mixed wastewater into a hypergravity reactor 12, and indroducing a gas having a first carbon dioxide concentration. The hypergravity reactor 12 mixes the mixed wastewater and the gas at a flow ratio of 30 to 400:1 for reaction to generate metal salt precipitates 15, an alkaline recovery liquid 14, and a treated gas 125.

Step S220: Determining the second hardness level of the alkaline recovery liquid 14, analyzing the composition of the metal salt precipitates 15, and/or analyzing the second carbon dioxide concentration of the treated gas 125.

Step S230: When the second hardness level and/or the second carbon dioxide concentration does not reach the target value, the alkaline recovery liquid 14 is injected into a recycling temporary storage tank 13, and the alkaline recovery liquid 14 is injected into the wastewater mixing tank 11 and circulated for a specific number of cycles. When the second hardness level and/or the second carbon dioxide concentration reaches the target value, the alkaline recovery liquid 14 is injected into a recycling temporary storage tank 13.

In steps S100 and S200, the alkaline liquid used to adjust the pH of the wastewater is sodium hydroxide, potassium hydroxide, or alkaline wastewater. The alkaline liquid adjusts the pH value of the wastewater to a pH value greater than 11, preferably 11.5 to 12.5. The amount of alkaline liquid added is determined based on the amount required to adjust the wastewater to a specific pH value. The amount can be calculated by methods commonly known in the art.

In steps S110 and S210, the wastewater and the gas that can produce precipitation are simultaneously introduced into the hypergravity reactor 12 to increase the mass transfer efficiency. The used gas is waste gas or air having a first carbon dioxide concentration ranging from 0.2%-12%, and the flow ratio of the gas to the first mixed wastewater ranges from 30 to 400.

The embodiment of the hypergravity reactor 12 of present disclosure is a hypergravity rotating packed bed, and the set hypergravity factor is between 50-250.

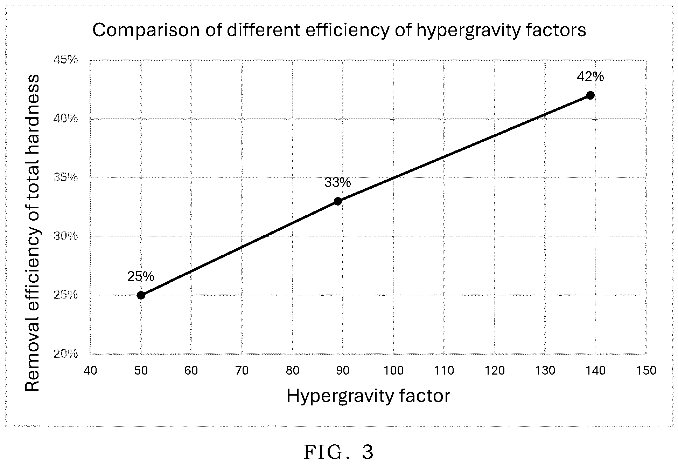

Please refer to FIG. 3, which is a comparison chart of continuous flow method for reducing wastewater hardness and carbon capture under hypergravity of present disclosure at different hypergravity factors, in which pH = 11.55, and the flow rate of the first mixed wastewater ($Q_L$) = 0.18 L/ min, the flow rate of gas ($Q_G$) = 72 L/min, the flow ratio of gas to the first mixed wastewater ($Q_G/Q_L$) = 400.

As shown in FIG. 3, when the hypergravity factor is 50, the removal efficiency of calcium ions is 25%; when the hypergravity is 89, the removal efficiency of calcium ions is 33%; when the hypergravity is 139, the calcium ion removal efficiency The ion removal efficiency is 42%. Therefore, the higher the gravity factor, the higher the calcium ion removal efficiency. Results show that it is necessary to increase the hypergravity factor. When designing the enlargement, the speed can be compared with the currently obtained hypergravity factor. The calculation equation of the hypergravity factor is as shown in Equation 1:

$$\beta = \frac{\int_{r_1}^{r_2} n * 2\pi r dr}{\int_{r_1}^{r_2} 2\pi r dr} = \frac{2\omega^2(r_1{}^2 + r_1 r_2 + r_2{}^2)}{3(r_1 + r_2)g}$$

$$\mathrm{Equation\ 1}$$

In this Equation, $\beta$: hypergravity factor (dimensionless), $r_1$: packed bed inner diameter (m), $r_2$: packed bed outer diameter (m), $\omega$: rotation speed (rpm), g: gravity acceleration (9.8 m/s$^2$).

In summary, the method for reducing hardness in wastewater of the present disclosure proceeds through the following steps:

(1) Adjust the pH in the wastewater, and adjust the liquid environment to an environment consistent with gas absorption. Taking carbon dioxide as an example, it is necessary to add lye (sodium hydroxide, NaOH) to adjust to an alkaline environment;

(2) Wastewater and gases that can produce precipitation are simultaneously passed into a reactor that improves mass transfer efficiency for reaction, so as to recover precipitates containing metal ions and low-hardness alkaline recovery water. The recovery water has a pH value of greater than 11.

The effect of the present disclosure is not only to remove the hardness level in the wastewater, but also to produce sediments with recovery value and consume part of the waste gas.

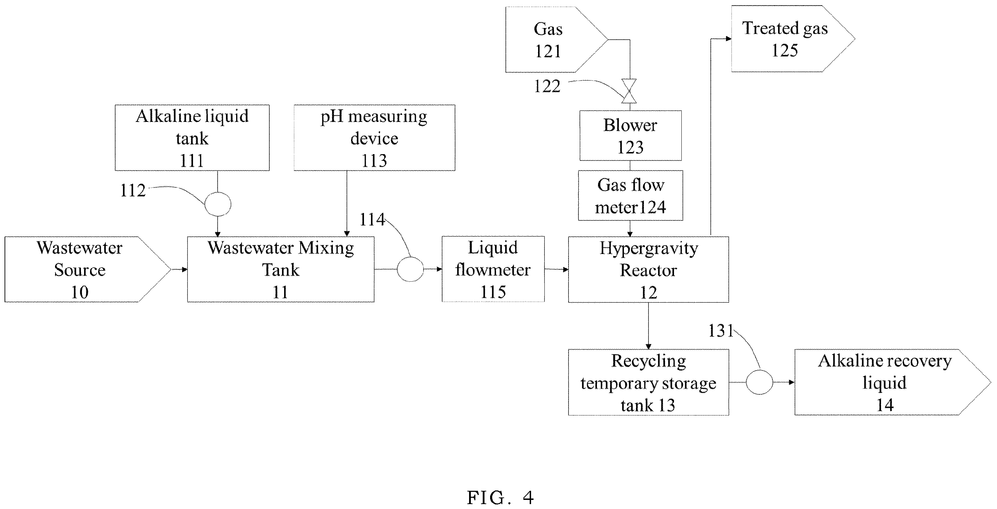

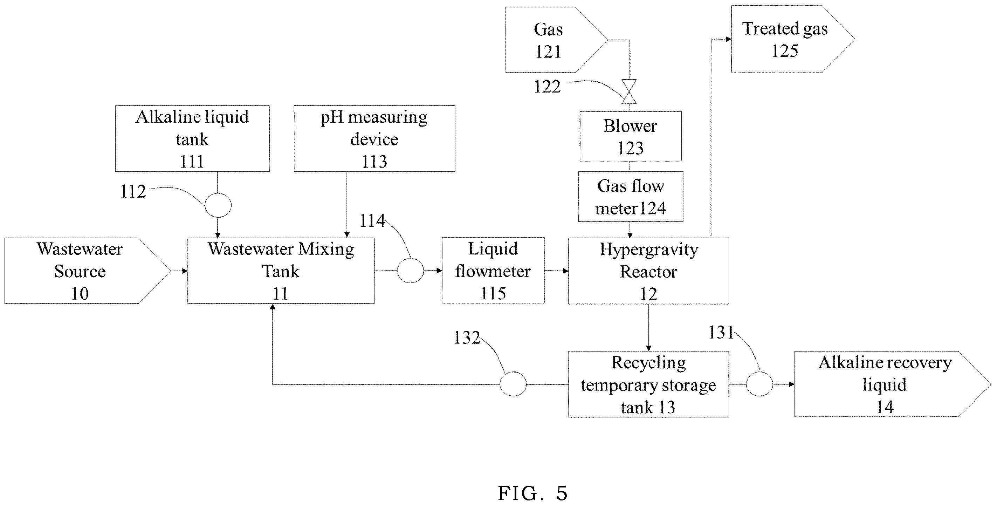

Please refer to FIG. 4 and FIG. 5, which are schematic diagrams of the first and second embodiments of the hypergravity continuous flow system for reducing wastewater hardness and carbon capture. The hypergravity continuous flow method for reducing wastewater hardness and carbon capture of the present disclosure includes two different embodiments, The first embodiment is a continuous flow system 1, which is the first embodiment of the hypergravity circulatory flow method for reducing wastewater hardness and carbon capture of the present disclosure as described above; The second embodiment is the circulatory flow system 2, which is the second embodiment of hypergravity circulatory flow method for reducing wastewater hardness and carbon capture of the present disclosure as described above.

As shown in FIG. 4 and FIG. 5, the continuous flow system 1 and the circulatory flow system 2 of the present disclosure for hypergravity continuous flow system for reducing wastewater hardness and carbon capture include: a wastewater mixing tank 11, a hypergravity reactor 12 , a recycling temporary storage tank 13, a blower 123 and a plurality of pumps 112, 114, 131, and 132.

The wastewater mixing tank 11 can be connected to the wastewater source 10 and the alkaline liquid tank 111 through pipelines. The wastewater mixing tank 11 receives wastewater containing metal ions and having a first hardness level from the wastewater source 10, and the alkaline liquid tank 111 injects alkaline liquid into the wastewater mixing tank 11 through the first pump 112. Alkaline liquid is alkaline wastewater, sodium hydroxide, or potassium hydroxide. The wastewater mixing tank 11 is provided with a stirring component to mix wastewater and alkaline liquid to form a mixed wastewater.

The pH value of the mixed wastewater in the wastewater mixing tank 11 can be measured by a pH measuring device 113, and adjusted to alkaline, which the pH value is greater than 11, preferably 11.5 to 12.5. The pH measuring device 113 used in present disclosure are a pH meter, a pH detector, or a pH monitor, etc. The pH measuring device 113 can measure the pH value and/or calculate the required amount of alkaline liquid based on the pH value and the type of alkaline liquid, thereby adding an appropriate amount of alkaline liquid to the alkaline liquid tank 111.

The wastewater mixing tank 11 is connected to the hypergravity reactor 12 with a pipeline. The wastewater mixing tank 11 can inject alkaline mixed wastewater into the hypergravity reactor 12 through the second pump 114, and measure the flow rate ($Q_L$) of the mixed wastewater through a liquid flowmeter 115.

An example of the hypergravity reactor 12 is hypergravity rotating packed bed which is provided with an air inlet and an air outlet. The blower 123 can indroduce the gas 121 with the first carbon dioxide concentration through the gate valve 122, and measure the flow rate ($Q_G$) of the gas 121 through the gas flowmeter 124. The gas is waste gas or air with the first carbon dioxide concentration between 0.2% and 12%.

The parameters of the hypergravity reactor 12 is adjusted. In the embodiment of FIG. 4 and the first cycle of the embodiment of FIG. 5, the hypergravity factor of the hypergravity rotating packed bed is set to 50-139, and the gas flow rate ($Q_G$) is set to 28-72 LPM. The flow rate ($Q_L$) of the mixed wastewater is set to 0.18-0.8 LPM, and the flow rate ($Q_G/Q_L$) ratio of gas to mixed wastewater is 45-400. Starting from the second cycle of the embodiment in FIG. 5, the hypergravity factor of the hypergravity rotating packed bed is set to 50 to 250, preferably 139 to 250, the gas flow rate is set to 36 LPM, and the mixed wastewater flow rate is ($Q_L$) is set to 0.6-1 LPM, and the flow rate ($Q_G/Q_L$) ratio of gas and mixed wastewater is 30-60. The hypergravity factor at the beginning of the second cycle can be greater than that of the first cycle, which can increase the carbon dioxide capture rate by 15%. The flow ratio at the beginning of the second cycle can be smaller than that of the first cycle, which can increase the carbon dioxide capture rate by 18% to further remove the residual calcium ions in the alkaline recovery liquid 14 that cannot be removed in the first cycle.

Gas and mixed wastewater react in the hypergravity reactor 12 due to gas-liquid contact to generate metal salt precipitates 15, alkaline recovery liquid 14 and treated gas 125. The alkaline recovery liquid 14 has a second hardness level less than the first hardness level of the wastewater, and the treated gas 125 has a second carbon dioxide concentration less than the first carbon dioxide concentration of the gas 121.

The difference between the continuous flow system 1 of the first embodiment and the circulatory flow system 2 of the second embodiment of the system for reducing wastewater hardness and carbon capture under hypergravity of present disclosure is that in the continuous flow system 1, as shown in the process of FIG. 1 as shown, determining the second hardness level of the alkaline recovery liquid 14, analyzing the composition of the metal salt precipitate, and/or analyzing the second carbon dioxide concentration of the treated gas 125. In this embodiment, thermogravimetric analysis (also known as thermogravimetric analysis or thermogravimetric analysis; TGA) is configured to confirm what kind of material the metal salt precipitate 15 is and the purity of the main material, and the treated alkaline recovery liquid 14 is the membrane bioreactor (MBR) system is passed through the third pump 131 for the next stage of processing.

In the circulatory flow system 2, as shown in the process in FIG. 2, confirm whether the hardness of the alkaline recovery liquid 14 meets the requirements. If the hardness has not reached the N.D. standard, inject the alkaline recovery liquid 14 into the recycling temporary storage tank 13 through the fourth pump 132, then inject the alkaline recovery liquid 14 into the wastewater mixing tank 11, determine whether the pH value needs to be adjusted to an appropriate value (11.5-12.5) through a pH measuring device 113, and then repass it into the hypergravity reactor 12 (i.e., hypergravity rotating packed bed) react with a new batch of gas until the hardness reaches the N.D. standard; in addition, the liquid flow rate of the mixed wastewater will affect the operating time. If the operating time exceeds 40 minutes, readjust the reactor parameters and find out the parameters that shorten the operating time.

At the end, analyze the second hardness level of the alkaline recovery liquid 14 is measured, the composition of the metal salt precipitate 15 is analyzed, and/or the second carbon dioxide concentration of the treated gas 125. In this embodiment, thermogravimetric analysis (also known as thermogravimetric analysis or thermogravimetric analysis, TGA) is configured to confirm what kind of material the metal salt precipitate 15 is and the purity of the main material, and the treated alkaline recovery liquid 14 is the membrane biological reaction (MBR) system is passed for the next stage of processing.

Embodiment 1-32:

In embodiments 1 to 20, the hardness level of the wastewater, the carbon dioxide content of the waste gas containing carbon dioxide, the pH value of the prepared wastewater, the flow ratio of the gas and the liquid passed into the reactor, the selected hypergravity factor, and the processing efficiency of each embodiment are shown in Table 1-3 below. In embodiments 21 to 32, the hardness of the wastewater, the carbon dioxide content of the waste gas containing carbon dioxide, the pH value of the prepared wastewater, the flow ratio of the gas and the liquid passed into the reactor, the selected hypergravity factor, the carbon dioxide efficiency, number of cycles, and cycle time of each embodiment are shown in Table 4-6 below. In practice, the carbon dioxide content of the carbon dioxide-containing waste gas is injected into the reactor varies depending on the process or time which can be 1550 ppm-2170 ppm, which the present disclosure does not intent to be limited thereto.

In embodiments 1 to 32, the calcium ions of the wastewater will react with carbon dioxide individually according to the chemical reaction formulas 1 to 4:

$$2OH^- + CO_2 \rightarrow CO_3^{2-} + 2H^+ \text{ (in alkaline environment)} \qquad \text{Chemical formula 1}$$

$$CaCl_2 \rightarrow Ca^{2+} + 2Cl^- \qquad \text{Chemical formula 2}$$

$$Ca^{2+} + CO_3^{2-} \rightarrow CaCO_{3(s)}\downarrow \qquad \text{Chemical formula 3}$$

$$Ca^{2+} + 2OH^- + CO_2 \rightarrow CaCO_{3(s)}\downarrow + 2H^+ + 2Cl^- \qquad \text{Chemical formula 4}$$

The hardness measurement used in the present disclosure uses the ethylenediaminetetraacetic acid (EDTA ) titration method; the carbon dioxide measurement uses the non-dispersive infrared (NDIR) method, and any method commonly known in the art can also be used for measurement, the present disclosure does not intent to be limited thereto.
In embodiments 1 to 20 of Table 1-3, the results shown are continuous flow operations. The results of gas flow rate/liquid flow rate are also called gas-liquid ratios. The differences under various conditions can be compared in embodiments 1 to 20, where the hardness removal rate is

$$\text{Hardness removal rate} = \frac{n_i - n_o}{n_i} * 100\%$$

Equation 2

In this Equation, $n_i$ represents how many ppm/$CaCO_3$ the total hardness in the wastewater is, and $n_o$ represents how many ppm/$CaCO_3$ the total hardness in the treated wastewater is.
The differences under various conditions can be compared in embodiments 1 to 20, where the carbon dioxide removal rate is calculated as shown in Equation 3:

$$\text{Carbon dioxide removal rate} = \frac{n_i - n_o}{n_i} * 100\%$$

Equation 3

In this Equation, $n_i$ represents the number of ppm of carbon dioxide in the carbon dioxide-containing waste gas (i.e., the first carbon dioxide concentration), and $n_o$ represents the number of ppm of carbon dioxide in the waste gas after reacting with the gas (i.e., the second carbon dioxide concentration).

Example 1: Different first hardness level

Table 1:

| Parameters | First hardness level (ppm) | First carbon dioxide concentration (ppm) | pH value of wastewater | Gas flow/liquid flow ($Q_G/Q_L$) | Hypergravity factor | Hardness removal rate (%) | Carbon dioxide removal rate (%) |
|---|---|---|---|---|---|---|---|
| Embodiment 1 | 4100 | 1960 | 12.5 | 180 | 139 | 19% | 25% |
| Embodiment 2 | 3070 | 1950 | 12.5 | 180 | 139 | 25% | 25% |
| Embodiment 3 | 3760 | 1900 | 12.5 | 180 | 139 | 25% | 18% |
| Embodiment 4 | 2700 | 1900 | 12.5 | 180 | 139 | 25% | 13% |

Example 2: Different flow ratios of the gas and the mixed wastewater

Table 2:

| Parameters | First hardnesslevel (ppm) | First carbon dioxide concentration (ppm) | pH value of wastewater | Gas flow/liquid flow ($Q_G/Q_L$) | Hypergravity factor | Hardness removal rate (%) | Carbon dioxide removal rate (%) |
|---|---|---|---|---|---|---|---|
| Embodiment 5 | 4000 | 1900 | 12.5 | 400 | 139 | 11% | 13% |
| Embodiment 6 | 4100 | 1745 | 12.5 | 360 | 139 | 13% | 20% |
| Embodiment 7 | 4100 | 1960 | 12.5 | 180 | 139 | 19% | 25% |
| Embodiment 8 | 4000 | 1820 | 12.5 | 90 | 139 | 25% | 38% |
| Embodiment 9 | 4000 | 1900 | 12.5 | 30 | 139 | 28% | 62% |
| Embodiment 10 | 2700 | 1900 | 12.5 | 90 | 139 | 29% | 35% |
| Embodiment 11 | 2700 | 1950 | 12.5 | 45 | 139 | 38% | 49% |
| Embodiment 12 | 2700 | 1800 | 12.15 | 200 | 139 | 13% | 12% |
| Embodiment 13 | 2700 | 1400 | 12.15 | 160 | 139 | 17% | 16% |
| Embodiment 14 | 2700 | 1700 | 12.15 | 100 | 139 | 25% | 22% |
| Embodiment 15 | 2700 | 1550 | 12.15 | 50 | 139 | 26% | 39% |

(continued)

| Parameters | First hardnesslevel (ppm) | First carbon dioxide concentration (ppm) | pH value of wastewater | Gas flow/liquid flow $(Q_G/Q_L)$ | Hypergravity factor | Hardness removal rate (%) | Carbon dioxide removal rate (%) |
|---|---|---|---|---|---|---|---|
| Embodiment 16 | 2700 | 1600 | 12.15 | 30 | 139 | 26% | 55% |

Example 3: different hypergravity factors

Table 3:

| Parameters | First hardnesslevel (ppm) | First carbon dioxide concentration (ppm) | pH value of wastewater | Gas flow/liquid flow $(Q_G/Q_L)$ | Hypergravity factor | Hardness removal rate (%) | Carbon dioxide removal rate (%) |
|---|---|---|---|---|---|---|---|
| Embodiment 17 | 4000 | 1600 | 11.5 | 400 | 50 | 8% | 5.5% |
| Embodiment 18 | 4100 | 1770 | 11.5 | 400 | 89 | 10% | 7% |
| Embodiment 19 | 4100 | 1700 | 11.5 | 400 | 139 | 19% | 15% |
| Embodiment 20 | 4000 | 1700 | 11.5 | 400 | 250 | 30% | 24% |

In embodiments 21 to 34, Table 4-6, the results shown are continuous flow operations. The results of gas flow /liquid flow are also called gas-liquid flow ratio. The differences under various conditions can be compared in embodiments 21 to 34, where the hardness removal rate is calculated as shown in Equation 2, and the carbon dioxide removal rate is calculated as shown in the above Equation 3.

Example 4: Different number of cycles

Table 4

| Parameters | First hardness level (ppm) | First carbon dioxide conc. (ppm) | pH value of waste water | Gas flow/liquid flow $(Q_G/Q_L)$ | Hyper gravity factor | Cycle time (min) | No. of cycles | Hardness removal rate (%) | Carbon dioxide removal rate (%) |
|---|---|---|---|---|---|---|---|---|---|
| Embodiment 21 | 700 | 2065 | 11.5 | 36 | 139 | 8 | 2 | 50% | 43% |
| Embodiment 22 | 700 | 1974 | 11.5 | 36 | 201 | 8 | 2 | 93% | 43% |
| Embodiment 23 | 700 | 2065 | 11.5 | 36 | 139 | 32 | 8 | 99% | 45% |
| Embodiment 24 | 700 | 1974 | 11.5 | 36 | 201 | 28 | 7 | 99% | 43% |
| Embodiment 25 | 1700 | 1712 | 11.5 | 50 | 139 | 102 | 17 | 99% | 35% |

(continued)

| Parameters | First hardness level (ppm) | First carbon dioxide conc. (ppm) | pH value of waste water | Gas flow/liquid flow $(Q_G/Q_L)$ | Hyper gravity factor | Cycle time (min) | No. of cycles | Hardness removal rate (%) | Carbon dioxide removal rate (%) |
|---|---|---|---|---|---|---|---|---|---|
| Embodiment 26 | 1500 | 1900 | 11.5 | 50 | 201 | 102 | 17 | 99% | 49% |
| Embodiment 27 | 2200 | 1850 | 11.5 | 50 | 139 | 66 | 11 | 99% | 40% |
| Embodiment 28 | 2200 | 1884 | 11.5 | 50 | 139 | 60 | 10 | 99% | 35% |
| Embodiment 29 | 2200 | 1926 | 11.5 | 50 | 139 | 48 | 8 | 85% | 37% |

Example 5: Different supergravity factors

Table 5:

| Parameters | First hardness level (ppm) | First carbon dioxide conc. (ppm) | pH value of waste water | Gas flow/liquid flow $(Q_G/Q_L)$ | Hyper gravity factor | Cycle time (min) | No. of cycles | Hardness removal rate (%) | Carbon dioxide removal rate (%) |
|---|---|---|---|---|---|---|---|---|---|
| Embodiment 30 | 700 | 2065 | 11.5 | 36 | 139 | 28 | 7 | 99% | 45% |
| Embodiment 31 | 700 | 1974 | 11.5 | 36 | 201 | 28 | 7 | 99% | 43% |
| Embodiment 32 | 684 | 2170 | 11.5 | 36 | 250 | 28 | 7 | 99% | 46% |

Example 6: Different wastewater pH values

Table 6:

| Parameters | First hardness level (ppm) | First carbon dioxide conc. (ppm) | pH value of waste water | Gas flow/liquid flow $(Q_G/Q_L)$ | Hyper gravity factor | Cycle time (min) | No. of cycles | Hardness removal rate (%) | Carbon dioxide removal rate (%) |
|---|---|---|---|---|---|---|---|---|---|
| Embodiment 33 | 2200 | 2016 | 12.5 | 50 | 139 | 54 | 9 | 99% | 64% |
| Embodiment 34 | 2200 | 1884 | 11.5 | 50 | 139 | 60 | 10 | 99% | 35% |

In order to simplify the description, Tables 1 to 6 do not show the second hardness level and the second carbon dioxide concentration, values of which can be deduced by using the hardness removal rate and the carbon dioxide removal rate into formulas 2 to 3.

The liquid volume operated in the operations of Embodiments 21-34 of Table 4 to Table 6 is fixed, preferably 60 liters, thereby, different liquid flow effects result in the same number of cycles but different cycle times. In the circulatory flow operation mode, multiple hypergravity rotating packed beds can be selectively connected in series to achieve the goal of a hardness outlet of N.D., or multiple hypergravity rotating packed beds can be connected in parallel to achieve the goal of a hardness outlet of N.D.; when the carbon dioxide concentration is high enough, it can be connected in series. If the carbon dioxide concentration is low, it needs to be connected in parallel. When gas and liquid enter the supergravity rotating packed bed, they will react in counter-flow or cross-flow according to the type of equipment.

For the metal salt precipitates 15 obtained in Tables 1 to 6, the composition of the metal salt precipitates 15 was confirmed through thermogravimetric analysis (also known as thermogravimetric analysis or thermogravimetric analysis; TGA). The TGA results show that the main detection curve of calcium carbonate begins to lose weight at 624.4 degrees. Therefore, the purity of calcium carbonate is judged to be 95.493%.

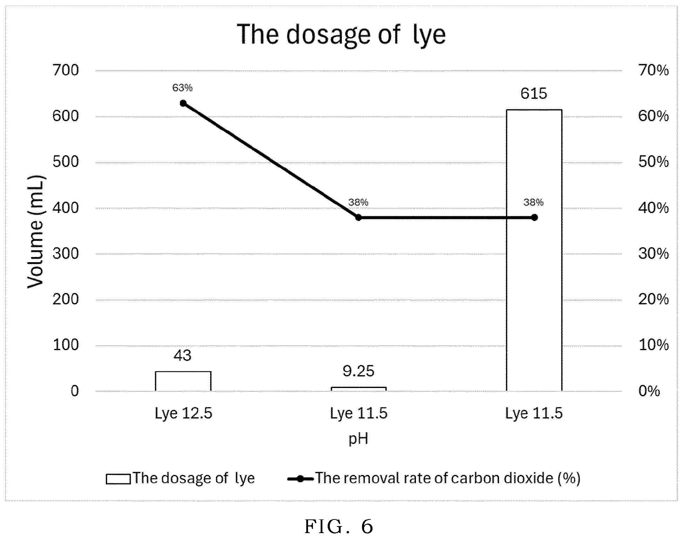

Please refer to FIG. 6, which is a comparison diagram of the hypergravity system and method for reducing wastewater hardness and carbon capture according to the present disclosure using different pH values and alkaline liquids.

As shown in FIG. 6, after testing, the amounts of the lye used to adjust the 4-liter sample to reach pH 11.5 and pH 12.5 was 9.25mL and 43mL, respectively. Results show that the carbon dioxide removal rates at pH 11.5 and pH 12.5 are 38% and 63% respectively. In addition, the present disclosure uses alkaline wastewater to replace lye (NaOH) to adjust the pH value. The dosage of lye is 1 to 20 mL per liter of wastewater containing calcium ions, and the dosage of alkaline wastewater is 100-200mL per liter of calcium ion-containing wastewater to further achieve the goal of treating waste with waste. The effect is not much different from the test results using lye. Whether to add lye or alkaline wastewater can be adjusted according to actual design requirements.

In summary, the method for reducing the hardness in wastewater of the present disclosure can not only effectively reduce the hardness in the wastewater, but also reduce the carbon dioxide in the waste gas. In addition, calcium carbonate with a purity of more than 95% can be obtained after the reaction, thereby, the present disclosure can achieve the effects of wastewater treatment, carbon emission reduction and industrial raw material recycling at the same time.

**Claims**

1.  A system for reducing wastewater hardness and carbon capture under hypergravity, comprising:

    a wastewater mixing tank connected to a wastewater source, wherein a wastewater of the wastewater source contains metal ions and has a first hardness level, the wastewater mixing tank is configured to mix the wastewater and an alkaline liquid to adjust a pH value of the wastewater to alkaline and to form a mixed wastewater; and
    a hypergravity reactor connected to the wastewater mixing tank and introducing a gas having a first carbon dioxide concentration, wherein the hypergravity reactor mixes the gas and the mixed wastewater at a flow ratio of 30-400:1 for reaction to generate metal salt precipitates, an alkaline recovery liquid, and a treated gas;
    wherein the alkaline recovery liquid has a second hardness level that is lower than the first hardness level, and the treated gas has a second carbon dioxide concentration that is lower than the first carbon dioxide concentration.

2.  The system according to the claim 1, further comprising a recycling temporary storage tank, wherein the recycling temporary storage tank is connected to the hypergravity reactor and the wastewater mixing tank, the recycling temporary storage tank is configured to inject the alkaline recovery liquid into the wastewater mixing tank and circulate the alkaline recovery liquid for a specific number of cycles.

3.  The system according to the claim 1, further comprising a blower, wherein the blower is connected to the hypergravity reactor to introduce the gas having the first carbon dioxide concentration into the hypergravity reactor.

4.  The system according to the claim 1, wherein the wastewater contains calcium chloride.

5.  The system according to the claim 1, wherein the gas is exhaust gas or air, and the first carbon dioxide concentration of the gas is 0.2-12%.

6.  The system according to the claim 1, wherein the alkaline liquid is alkaline wastewater, sodium hydroxide, or potassium hydroxide.

7.  The system according to the claim 1, wherein a hypergravity factor of the hypergravity reactor is 50-250.

8.  The system according to the claim 1, wherein a carbon dioxide removal rate of the system is 5.5-64% and/or a hardness removal rate of the system is 8-99%.

9. A method for reducing wastewater hardness and carbon capture under hypergravity, comprising the following steps:

injecting a wastewater from a wastewater source into a wastewater mixing tank, the wastewater containing metal ions and having a first hardness level, mixing the wastewater and an alkaline liquid in the wastewater mixing tank to adjust a pH value of the wastewater to alkaline, thereby forming a mixed wastewater; and

injecting the mixed wastewater into a hypergravity reactor, and introducing a gas having a first carbon dioxide concentration, wherein the hypergravity reactor mixes the mixed wastewater and the gas at a flow ratio of 30-400:1 for reaction to generate metal salt precipitates, an alkaline recovery liquid, and a treated gas; wherein the alkaline recovery liquid has a second hardness level that is lower than the first hardness level, and the treated gas has a second carbon dioxide concentration that is lower than the first carbon dioxide concentration.

10. The method according to claim 9, further comprising: injecting the alkaline recovery liquid into a recycling temporary storage tank, and injecting the alkaline recovery liquid into the wastewater mixing tank and circulating the alkaline recovery liquid for a specific number of cycles.

Injecting a wastewater from a wastewater source into a wastewater mixing tank, the wastewater containing metal ions and having a first hardness level, mixing the wastewater and an alkaline liquid in the wastewater mixing tank to adjust a pH value of the wastewater to alkaline, thereby forming a mixed wastewater — S100

Injecting the mixed wastewater into a hypergravity reactor, and introducing a gas with a first carbon dioxide concentration, wherein the hypergravity reactor mixes the mixed wastewater and the gas at a flow ratio of 30 to 400:1 for reaction to generate metal salt precipitates, an alkaline recovery liquid, and a treated gas — S110

Determining a second hardness level of the alkaline recovery liquid, analyzing a composition of the metal salt precipitate, and/or analyzing a second carbon dioxide concentration of the treated gas — S120

FIG. 1

Injecting a wastewater from a wastewater source into a wastewater mixing tank, the wastewater containing metal ions and having a first hardness level, mixing the wastewater and an alkaline liquid in the wastewater mixing tank to adjust a pH value of the wastewater to alkaline, thereby forming a mixed wastewater

S200

Injecting the mixed wastewater into a hypergravity reactor, and introducing a gas with a first carbon dioxide concentration, wherein the hypergravity reactor mixes the mixed wastewater and the gas at a flow ratio of 30 to 400:1 for reaction to generate metal salt precipitates, an alkaline recovery liquid, and a treated gas

S210

Determining a second hardness level of the alkaline recovery liquid, analyzing a composition of the metal salt precipitate, and/or analyzing a second carbon dioxide concentration of the treated gas

S220

injecting the alkaline recovery liquid into a recycling temporary storage tank when the second hardness level and/or the second carbon dioxide concentration does not reach a target value, and injecting the alkaline recovery liquid into the wastewater mixing tank and circulating for a specific number of cycles

S230

FIG. 2

Comparison of different efficiency of hypergravity factors

FIG. 3

FIG. 4

Gas
121

Treated gas
125

122

Alkaline liquid
tank
111

pH measuring
device
113

Blower
123

Gas flow
meter124

112

114

Wastewater
Source
10

Wastewater Mixing
Tank
11

Liquid
flowmeter
115

Hypergravity
Reactor
12

132

131

Recycling
temporary storage
tank 13

Alkaline recovery
liquid
14

FIG. 5

FIG. 6

Europäisches
Patentamt

European
Patent Office

Office européen
des brevets

## EUROPEAN SEARCH REPORT

**Application Number**

EP 24 21 7031

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Evie Nessi S ET AL: "Experimental Testing for Calcium Carbonate Nanoparticles Production in a Rotating Packed Bed", , 1 January 2022 (2022-01-01), pages 1-6, XP093271139, DOI: 10.3303/CET2294121 Retrieved from the Internet: URL:https://www.cetjournal.it/cet/22/94/121.pdf | 1-8 | INV. C02F5/02 B01D53/78 ADD. C02F1/66 |
| Y | * section 2.1 and 2.2; figure 1 * | 9,10 | |
| Y | CN 109 534 537 A (UNIV CHANGZHOU) 29 March 2019 (2019-03-29) * par. 45 * | 9,10 | |
| A | LI XIAO-LONG ET AL: "Conversion of Activated Calcium in Industrial Water to Micron CaCO3 Powder Based on CO2 Absorption and Mineralization", MINERALS, vol. 13, no. 7, 23 July 2023 (2023-07-23), page 979, XP093271128, ISSN: 2075-163X, DOI: 10.3390/min13070979 Retrieved from the Internet: URL:https://www.mdpi.com/2075-163X/13/7/979/pdf> * abstract; figure 1 * * section conclusion * * page 2, 10 * | 9,10 | TECHNICAL FIELDS SEARCHED (IPC) C02F B01F B01D |

-/--

The present search report has been drawn up for all claims

| Place of search | Date of completion of the search | Examiner |
|---|---|---|
| The Hague | 17 April 2025 | Mulder, Lonneke |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 

& : member of the same patent family, corresponding
   document

EPO FORM 1503 03.82 (P04C01)

Europäisches
Patentamt

European
Patent Office

Office européen
des brevets

**EUROPEAN SEARCH REPORT**

**Application Number**

EP 24 21 7031

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | LU CHENG-GONG ET AL: "Advancements in the Research on the Preparation and Growth Mechanisms of Various Polymorphs of Calcium Carbonate: A Comprehensive Review", CRYSTALS, vol. 15, no. 3, 13 March 2025 (2025-03-13) , page 265, XP093271135, CH ISSN: 2073-4352, DOI: 10.3390/cryst15030265 Retrieved from the Internet: URL:https://www.mdpi.com/2073-4352/15/3/265/pdf> * section 3.3.1; figure 10 * | 1-10 | |

TECHNICAL FIELDS
SEARCHED         (IPC)

The present search report has been drawn up for all claims

| Place of search | Date of completion of the search | Examiner |
|---|---|---|
| The Hague | 17 April 2025 | Mulder, Lonneke |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 21 7031

This annex lists the patent family members relating to the patent documents cited in the above-mentioned European search report.
The members are as contained in the European Patent Office EDP file on
The European Patent Office is in no way liable for these particulars which are merely given for the purpose of information.

17-04-2025

| Patent document cited in search report | Publication date | Patent family member(s) | Publication date |
|---|---|---|---|
| CN 109534537 A | 29-03-2019 | NONE | |

For more details about this annex : see Official Journal of the European Patent Office, No. 12/82